# EUROPÄISCHE PATENTSCHRIFT

(11) **EP 0 760 329 B1**
(45) Veröffentlichungstag und Bekanntmachung des Hinweises auf die Patenterteilung: **03.05.2000**
(21) Anmeldenummer: 96110112.8
(22) Anmeldetag: 22.06.1996
(51) Int. Cl.: B62D 25/02, B62D 25/04

(54) **Seitenwandbaugruppe für eine Kraftfahrzeugkarosserie**
Assembley of side panels of motor car bodies
Ensemble de panneaux latéraux d'une carosserie automobile

(30) Priorität: 30.08.1995 DE 19531874
(43) Veröffentlichungstag der Anmeldung: 05.03.1997
(73) Patentinhaber: DaimlerChrysler AG, 70567 Stuttgart (DE)
(72) Erfinder: Kleinhans, Klaus, 71034 Böblingen (DE); Brodt, Martin, 71272 Renningen (DE); Rothfuss, Otto, 75365 Holzbronn (DE); Rogal, Sven, 71134 Aidlingen (DE); Determann, Reinhard, 71083 Herrenberg (DE)

(56) Entgegenhaltungen:
- DE-A- 2 445 007
- DE-A- 2 712 084
- DE-A- 2 829 608
- DE-A- 2 931 467
- DE-U- 6 902 564
- US-A- 3 776 589
- US-A- 5 246 264

## Beschreibung

Die Erfindung betrifft eine Seitenwandbaugruppe für eine Kraftfahrzeugkarosserie, die sich wenigstens von einer A-Säule bis zu einem hinteren Radeinbau in Fahrzeuglängsrichtung nach hinten erstreckt und eine Seitenwandstruktur sowie eine mit dieser verbundene Seitenwandbeplankung aufweist.

Aus der DE 29 31 467 C3 ist eine hintere Seitenwandbaugruppe für einen Personenkraftwagen bekannt, die einen inneren Seitenwandteil und einen als Beplankung dienenden äußeren Seitenwandteil aufweist. Auf den inneren Seitenwandteil sind mehrere Verstärkungselemente aufgesetzt, die durch die als äußerer Seitenwandteil dienende Seitenwandbeplankung abgedeckt werden.

Der DE 27 12 084 A1 und der US 5,246,264 kann jeweils eine aus zwei einander überdeckenden Halbschalen bestehende Seitenwandbaugruppe als bekannt entnommen werden, deren säulenförmige Hohlprofilbereiche mit eingelegten Verstärkungsabschnitten versehen sein können.

Aufgabe der Erfindung ist es, eine Seitenwandbaugruppe der eingangs genannten Art zu schaffen, die eine einfach gestaltete Seitenwandbeplankung aufweist und insbesondere für einen Seitenaufprall günstige Strukturverhältnisse bildet.

Diese Aufgabe wird dadurch gelöst, daß die Seitenwandstruktur aus zwei quer zur Fahrzeuglängsrichtung zusammengesetzten Seitenwandteilen aufgebaut ist, die wenigstens in einem Schwellerbereich jeweils halbschalenartig ausgebildet sind und einander zu einem den Schweller bildenden Hohlprofil ergänzen, das die Seitenwandbeplankung in diesem Bereich ersetzt. Dadurch werden für die sichere Aufnahme von Seitenaufprallbelastungen günstige Strukturverhältnisse gebildet. Die Seitenwandbaugruppe weist weiteres Potential für eine höhere Dimensionierung auf. Außerdem ist die Seitenwandbaugruppe einfach gestaltet und kostengünstig zu fertigen und somit besonders geeignet für die Variantenbildung innerhalb einer Fahrzeugbaureihe. Durch die geschickt gewählten Strukturverhältnisse der Seitenwandbaugruppe ist eine gezielte Dimensionierung erzielbar, die bei gleichen Seitenaufprallanforderungen Gewichtsvorteile gegenüber dem Stand der Technik aufweist. Durch die erfindungsgemäße Lösung wird der Schweller bereits durch die Seitenwandstruktur, d.h. durch die beiden inneren Seitenwandteile gebildet, so daß die von außen aufgesetzte Seitenwandbeplankung ohne Schwellerprofil hergestellt werden kann. Die Seitenwandbeplankung ist dadurch einfacher herstellbar und einfach an die Seitenwandstruktur ansetzbar. Die Seitenwandstruktur ist dabei aus einem inneren Seitenwandteil und einem äußeren, insbesondere zur Verstärkung dienenden Seitenwandteil zusammengesetzt, wobei beide Seitenwandteile zu einem einstückigen Bauteil vorab zusammengefügt wurden. Vorzugsweise sind alle drei Seitenwandteile, d.h. der innere Seitenwandteil und der zur Verstärkung dienende äußere Seitenwandteil sowie die nach außen abschließende Seitenwandbeplankung als einstückige Blechpreßteile hergestellt. Ein aufwendiges Zusammenschweißen der jeweiligen Seitenwandteile entfällt durch diese Lösung.

In Ausgestaltung der Erfindung ist an den innenliegenden Seitenwandteil wenigstens ein äußerer Abschnitt eines hinteren Radeinbaus angebunden. Somit ist entweder lediglich ein äußerer oder ein äußerer und ein innerer Abschnitt des hinteren Radeinbaus an die innenliegende Seitenwand angebunden. Dadurch wird der Aufbau der Seitenwandbaugruppe weiter vereinfacht.

In weiterer Ausgestaltung der Erfindung weist der außenliegende Seitenwandteil sichtbare Außenschalen eines an den Schweller anschließenden unteren A-Säulenteiles sowie einer an den Schweller anschließenden B-Säule auf. Durch diese Ausgestaltung wird die Form der Seitenwandbeplankung weiter vereinfacht, da der äußere Seitenwandteil der Seitenwandstruktur in einem unteren Abschnitt der A-Säule sowie im Bereich der B-Säule bereits die Außenhaut der Kraftfahrzeugkarosserie bildet und somit eine Seitenwandbeplankung in diesen Bereichen entfällt.

In weiterer Ausgestaltung der Erfindung deckt die Seitenwandbeplankung die verbleibenden Abschnitte der Außenhaut der Seitenwand ab. Die Seitenwandbeplankung deckt daher zum einen die Seitenwandstruktur in den Bereichen ab, in denen die Seitenwandstruktur nicht bereits selbst die Außenhaut der Seitenwandbaugruppe bildet. Darüber hinaus trägt die Seitenwandbeplankung zur zusätzlichen Verstärkung der Seitenwandbaugruppe bei, da im Bereich der Seitenwandbeplankung drei Profilschichten, nämlich der innere Seitenwandteil, der äußere Seitenwandteil und die Seitenwandbeplankung, vorgesehen sind.

Weitere Vorteile und Merkmale der Erfindung ergeben sich aus den Unteransprüchen. Nachfolgend sind bevorzugte Ausführungsbeispiele der Erfindung anhand der Zeichnungen und der Beschreibung dargestellt.
- Fig. 1: zeigt eine Kraftfahrzeugkarosserie in perspektivischer Darstellung, die mit einer erfindungsgemäßen Ausführungsform einer Seitenwandbaugruppe versehen ist,
- Fig. 2a: in einer Explosionsdarstellung den Aufbau einer ersten erfindungsgemäßen Ausführungsform einer Seitenwandbaugruppe,
- Fig. 2b: in einer weiteren Explosionsdarstellung eine erfindungsgemäße Ausführungsform einer zweiten Seitenwandbaugruppe,
- Fig. 3a: einen Schnitt durch die Seitenwandbaugruppe der Fig. 2a im Bereich der Schnittlinie III-III,
- Fig. 3b: in einem weiteren Schnitt schematisch das Profil der Seitenwandbaugruppe der Figur 2b entlang der Schnittlinie III-III in Fig. 1,
- Fig. 4a: einen Profilschnitt durch die Seitenwandbaugruppe der Fig. 2a entlang der Schnittlinie IV-IV in Fig. 1,
- Fig. 4b: schematisch einen Schnitt durch die Seitenwandbaugruppe nach Fig. 2b entlang der Schnittlinie IV-IV in Fig. 1,
- Fig. 5: einen Schnitt durch die Seitenwandbaugruppe der Kraftfahrzeugkarosserie nach Fig. 1 entlang der Schnittlinie V-V, auf deren Höhe beide Varianten der Seitenwandbaugruppen nach den Figuren 2a und 2b identisch gestaltet sind,
- Fig. 6: einen weiteren Schnitt durch die Kraftfahrzeugkarosserie entlang der Schnittlinie VI-VI in Fig. 1,
- Fig. 7a: einen Schnitt durch die Kraftfahrzeugkarosserie nach Fig. 1 entsprechend der Gestaltung der Seitenwandbaugruppe nach Fig. 2a entlang der Schnittlinie VII-VII in Fig. 1,
- Fig. 7b: eine weitere Schnittdarstellung entlang der Schnittlinie VII-VII in Fig. 1 der zweiten Seitenwandbaugruppe gemäß Fig. 2b,
- Fig. 8a: einen Schnitt durch die Seitenwandbaugruppe gemäß Fig. 2a entlang der Schnittlinie VIII-VIII in Fig. 1,
- Fig. 8b: eine weitere Schnittdarstellung entlang der Schnittlinie VIII-VIII in Fig. 1, jedoch für die Seitenwandbaugruppe nach Fig. 2b,
- Fig. 9a: einen Schnitt durch den Schwellerbereich der Seitenwandbaugruppe nach Fig. 2a im Bereich der Schnittlinie IX-IX in Fig. 1,
- Fig. 9b: einen schematisierten Schnitt durch den Schwellerbereich der Seitenwandbaugruppe nach Fig. 2b ebenfalls entlang der Schnittlinie IX-IX in Fig. 1, und
- Fig. 10: einen Schnitt durch die Kraftfahrzeugkarosserie im Bereich der Schnittlinie X-X.

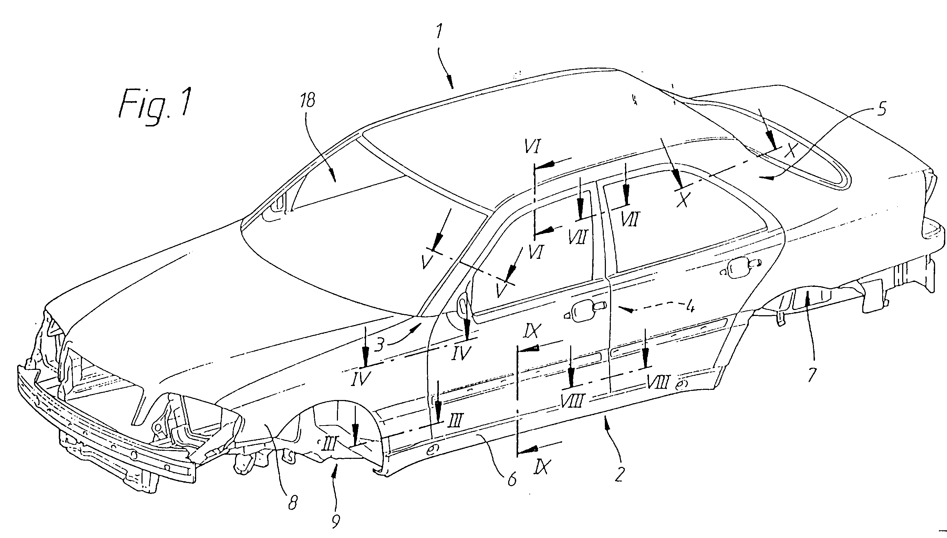

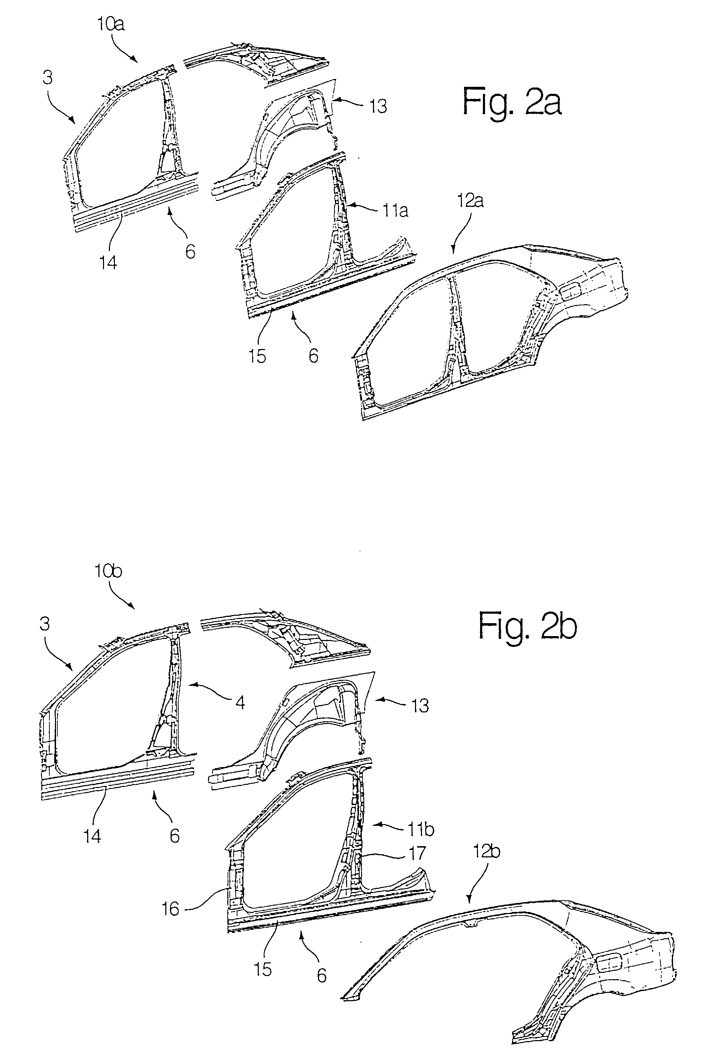

Eine Kraftfahrzeugkarosserie (1) nach Fig. 1 weist eine selbsttragende Karosserietragstruktur auf und ist vorzugsweise für einen viertürigen Personenkraftwagen vorgesehen. Die Kraftfahrzeugkarosserie (1) weist auf jeder Seite zwei Seitentüren auf, die jedoch nicht Teil der Seitenwandbaugruppe im Sinne der Erfindung sind. Die Kraftfahrzeugkarosserie (1) weist auf jeder Seite eine Seitenwandbaugruppe (2) auf, die sich von einer A-Säule (3) über eine B-Säule (4) und eine C-Säule (5) bis zu einem hinteren Radeinbau (7) erstreckt. Die Seitenwandbaugruppe weist außerdem den nicht näher bezeichneten hinteren Kotflügel auf jeder Seite auf. Die beiden vorderen Kotflügel (8) hingegen sind in den nachfolgend näher beschriebenen Seitenwandbaugruppen (Fig. 2a und 2b) nicht enthalten. Auch ein vorderer Radeinbau (9) auf jeder Seite der Kraftfahrzeugkarosserie (1) ist nicht Teil der Seitenwandbaugruppe. Nach unten schließt die Seitenwandbaugruppe (2) durch einen Schweller (6), nach oben durch einen nicht näher bezeichneten Dachrahmen ab.

Nachfolgend sind zwei Varianten von Seitenwandbaugruppen näher beschrieben, die anhand der Figuren 2a und 2b dargestellt sind. Beide Seitenwandbaugruppen sind alternativ als Seitenwandbaugruppe (2) in der Kraftfahrzeugkarosserie (1) nach Figur 1 einsetzbar. Die Seitenwandbaugruppe gemäß Figur 2a ist dabei anhand der mit dem Buchstaben a versehenen Figuren dargestellt, die Seitenwandbaugruppe gemäß Figur 2b hingegen ist in den Figuren mit dem Buchstaben b erläutert. Die Schnittdarstellungen, deren Figurennummern nicht durch die Buchstaben a oder b gekennzeichnet sind, gelten für beide Varianten der Seitenwandbaugruppen. Auch die Bezugszeichen sind je nach der dargestellten Varianten der Seitenwandbaugruppe mit Buchstaben (a) oder (b) versehen. Die Bezugszeichen, die nicht mit einem Buchstabenzusatz versehen sind, stellen Teile oder Abschnitte der Seitenwandbaugruppe dar, die für beide Seitenwandbaugruppen identisch sind.

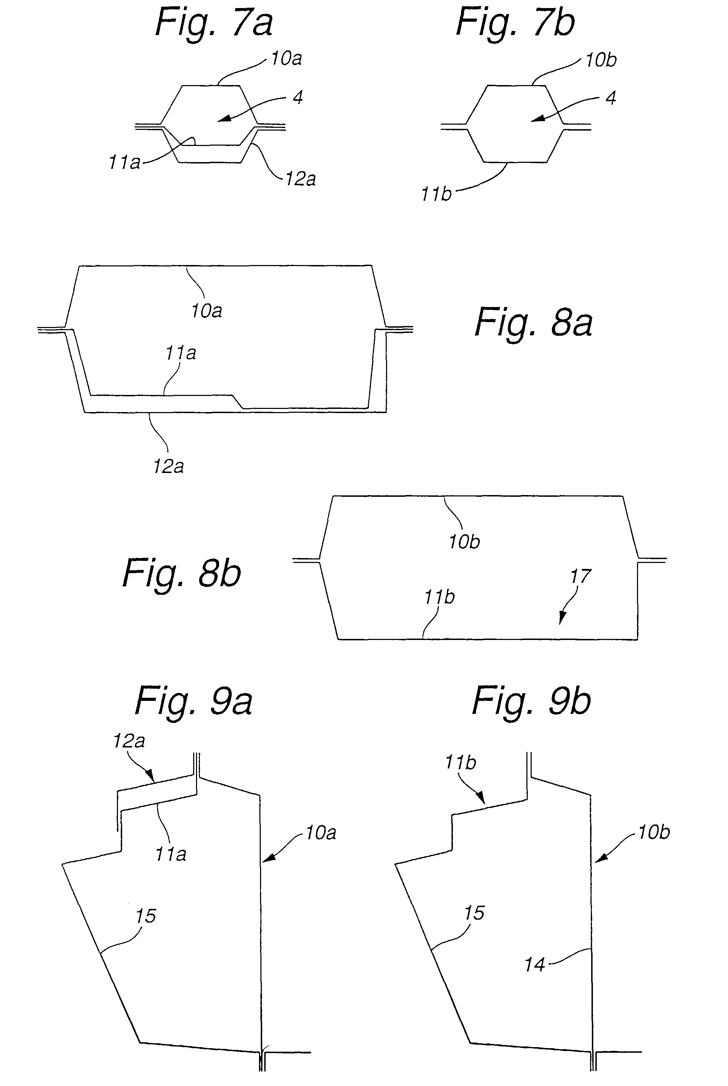

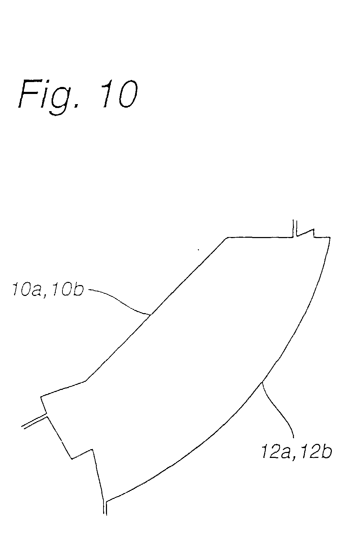

Die Seitenwandbaugruppe gemäß Fig. 2a weist einen als einstückiges Blechpreßteil hergestellten inneren Seitenwandteil (10a) auf, der den inneren Teil der Seitenwandstruktur darstellt und sich von einer A-Säule (3) bis in den hinteren Kotflügelbereich erstreckt. Durch den inneren Seitenwandteil (10a) werden bereits die Türausschnitte für die beiden Seitentüren gebildet. In einem Bereich unmittelbar hinter der C-Säule wird an den inneren Seitenwandteil (10a) eine äußere Radeinbauhälfte (13) angeschweißt. In ihrem Schwellerbereich weist der innere Seitenwandteil (10a) unterhalb der beiden Türausschnitte ein halbschalenartiges Profil (14) auf, das die innere Profilhälfte für den Schweller (6) bildet. Der Seitenwandteil (11a) ist ebenfalls als einstückiges Blechpreßteil hergestellt und bildet einen Türausschnitt für die vordere Seitenwandtür, indem er die korrespondierenden Profilbereiche zu dem Seitenwandteil (10a) für die A-Säule (3), den vorderen Dachrahmenteil und die B-Säule (4) bildet. Außerdem weist der Seitenwandteil (11a) über die gesamte Länge des Schwellerbereiches die zugehörige äußere Profilhälfte (15) des Schwellers (6) auf, so daß die beiden Profilhälften (14 und 15) einander beim Aufsetzen des Seitenwandteiles (11a) auf den Seitenwandteil (10a) zu einem geschlossenen, stabilen Hohlprofil ergänzen. Die Profilhälfte (15) des Schwellers (6) an dem Seitenwandteil (11a) stellt außerdem bereits den nach außen sichtbaren Schwellerbereich der Außenhaut der Kraftfahrzeugkarosserie (1) dar, so daß in diesem Bereich keine Beplankung mehr aufgesetzt werden muß. Entsprechend ist auch die Seitenwandbeplankung (12a), die von außen auf die beiden bereits zu einer Seitenwandstruktur zusammengefügten Seitenwandteile (10a und 11a) aufgesetzt wird, ausgespart. Der schematische Profilverlauf der beiden Seitenwandteile (10a und 11a) sowie der Seitenwandbeplankung (12a) ist anhand der Figuren 3a, 4a, 5, 6, 7a, 8a, 9a und 10 erkennbar.

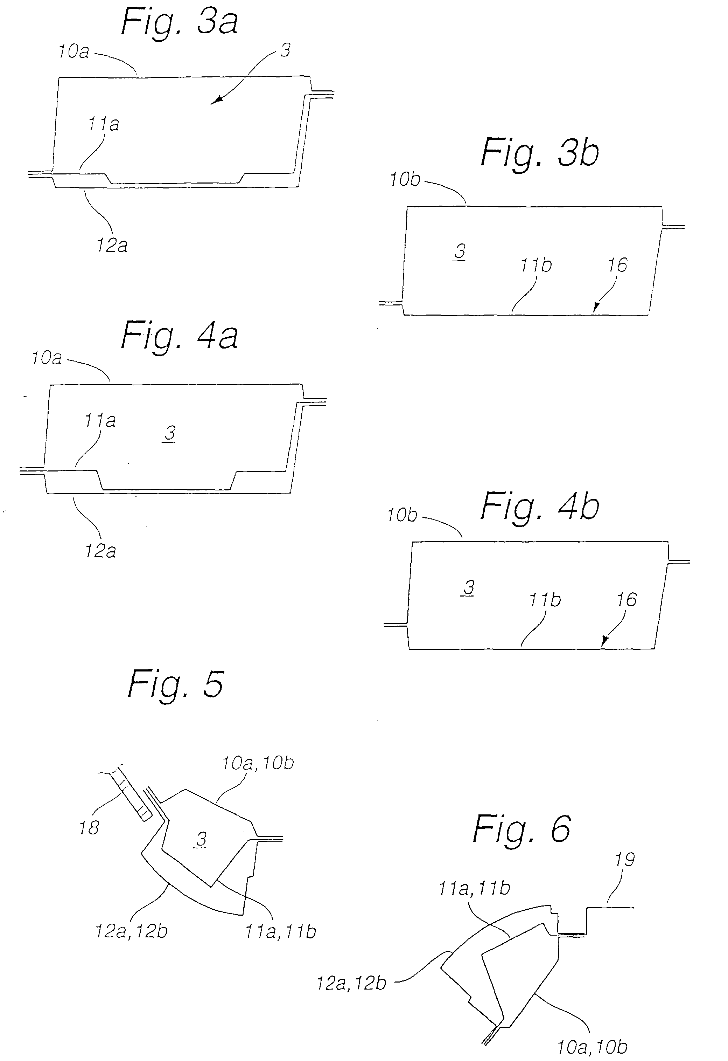

Bei der Seitenwandbaugruppe gemäß Fig. 2b entspricht der innere Seitenwandteil (10b) dem Seitenwandteil (10a) gemäß Fig. 2a. Unterschiedlich sind lediglich der als Integralverstärkung dienende Seitenwandteil (11b) und die Seitenwandbeplankung (12b) gestaltet. Bei dem Seitenwandteil (11b) bildet die Profilhälfte (15) wie auch bei dem Seitenwandteil (11a) die äußere Schale des Schwellers (6). Zusätzlich ist bei dem Seitenwandteil (11b) ein unterer A-Säulenabschnitt (16) der A-Säule (3) und ein B-Säulenbereich (17) der B-Säule (4) als korrespondierende Profilschalenhälfte zu den entsprechenden Abschnitten des Seitenwandteiles (10b) ausgebildet. Dadurch ergibt sich sowohl in dem unteren, vertikalen A-Säulenabschnitt (16) als auch über die gesamte Höhe der B-Säule (4) durch den B-Säulenbereich (17) ein Hohlprofil, wobei der B-Säulenbereich (17) und der A-Säulenabschnitt (16) die äußere Schale der Seitenwandbaugruppe bilden. Dadurch, daß diese Abschnitte (16 und 17) die Außenseiten der Seitenwandbaugruppe (2) bilden, ist die Seitenwandbeplankung (12b) entsprechend einfacher gestaltet, indem sie im Bereich der B-Säule (4) und im Bereich des unteren Abschnittes der A-Säule (3) ausgespart ist. Die Gestaltung der Seitenwandbeplankung (12b), die von außen auf die beiden zusammengefügten Seitenwandteile (10b und 11b) gesetzt wird, ist in Fig. 2b gut erkennbar. Der schematische Profilverlauf über die gesamte Länge und Höhe der Seitenwandteile (10b und 11b) und der Seitenwandbeplankung (12b) in der Seitenwandbaugruppe (2) gemäß Fig. 1 ist anhand der Figuren 3b, 4b, 5, 6, 7b, 8b, 9b und 10 erläutert. Auch bei dem Seitenwandteil (10b) ist die äußere Radeinbauhälfte (13) in identischer Weise wie bei dem Seitenwandteil (10a) an den Seitenwandteil (10b) angeschweißt.

## Patentansprüche

1. Seitenwandbaugruppe für eine Kraftfahrzeugkarosserie, die sich wenigstens von einer A-Säule (3) bis zu einem hinteren Radeinbau (13) in Fahrzeuglängsrichtung nach hinten erstreckt und eine Seitenwandstruktur sowie eine mit dieser verbundene Seitenwandbeplankung (12a,12b) aufweist,
**dadurch gekennzeichnet, daß**
die Seitenwandstruktur aus zwei quer zur Fahrzeuglängsrichtung zusammengesetzten Seitenwandteilen (10a, 11a; 10b, 11b) aufgebaut ist, die wenigstens in einem Schwellerbereich (14, 15) jeweils halbschalenartig ausgebildet sind und einander zu einem den Schweller (6) bildenden Hohlprofil ergänzen, das die Seitenwandbeplankung (12a, 12b) in diesem Bereich ersetzt.

2. Seitenwandbaugruppe nach Anspruch 1,
**dadurch gekennzeichnet, daß**
an dem innenliegenden Seitenwandteil (10a; 10b) wenigstens ein äußerer Abschnitt eines hinteren Radeinbaus (13) angebunden ist.

3. Seitenwandbaugruppe nach Anspruch 1 oder 2,
**dadurch gekennzeichnet, daß**
der außenliegende Seitenwandteil (11b) sichtbare Außenschalen (16, 17) eines an den Schweller (6) anschließenden unteren A-Säulenteiles (3) sowie einer an den Schweller (6) anschließenden B-Säule (4) aufweist.

4. Seitenwandbaugruppe nach einem der vorhergehenden Ansprüche,
**dadurch gekennzeichnet, daß**
die Seitenwandbeplankung (12a, 12b) die verbleibenden Außenhautabschnitte der Seitenwandbaugruppe (2) abdeckt.

5. Seitenwandbaugruppe nach Anspruch 4,
**dadurch gekennzeichnet, daß**
die Seitenwandbeplankung (12a) die verbleibenden Außenhautabschnitte der Seitenwandbaugruppe (2) als einstückiges, geschlossenes Bauteil abdeckt.

## Claims

1. Side wall subassembly for a vehicle body, which extends, in the lengthwise direction of the vehicle, at least backwards from an A-column (3) to a rear wheel-assembly member (13), and has a side wall structure and a side wall covering (12a, 12b) which is connected to this side wall structure,
characterized in that the side wall structure is made up of two side wall sections (10a, 11a; 10b, 11b), joined together transversely in relation to the lengthwise direction of the given vehicle, which are at least developed, like half-shells, in a built out area (14, 15) and supplement each other in a hollow section which forms the built out member (6), the said hollow section, in this area, replacing the side wall covering (12a, 12b).

2. Side wall subassembly in accordance with claim 1,
characterized in that the inner side wall section (10a; 10b) is connected onto an outer section of a rear wheel-assembly member (13).

3. Side wall subassembly in accordance with claim 1 or 2,
characterized in that the outer side wall section (11b) has visible outer shells (16, 17) of a lower A-column section (3) which adjoins the built out member (6), and a B-column (4) which adjoins the built out member (6).

4. Side wall subassembly in accordance with any one of the preceding claims,
characterized in that the side wall covering (12a, 12b) covers the remaining outer covering sections of the side wall subassembly (2).

5. Side wall subassembly in accordance with claim 4,
characterized in that the side wall covering (12a) covers the remaining outer sections of the side wall subassembly (2) as a single, closed component.

## Revendications

1. Sous-ensemble de paroi latérale pour une carrosserie de véhicule automobile, qui s'étend vers l'arrière dans la direction longitudinale du véhicule, au moins d'un montant A (3) jusqu'à un passage de roue arrière (13), et qui présente une structure de paroi latérale ainsi qu'un revêtement de paroi latérale (12a, 12b) qui y est assemblé, caractérisé en ce que la structure de paroi latérale est composée de deux parties de paroi latérale (10a, 11a ; 10b , 11b) assemblées transversalement à la direction longitudinale du véhicule et qui, au moins dans une région de seuil (14, 15), sont réalisées chacune en forme de demi-coque et se complètent mutuellement pour constituer un profilé creux formant le seuil (6) et qui remplace dans cette région le revêtement de paroi latérale (12a, 12b).

2. Sous-ensemble de paroi latérale selon la revendication 1, caractérisé en ce qu'à la partie (10a ; 10b) de la paroi latérale qui se trouve à l'intérieur, est assemblé au moins un segment extérieur d'un passage de roue arrière (13).

3. Sous-ensemble de paroi latérale selon la revendication 1 ou 2, caractérisé en ce que la partie (11b) de la paroi latérale qui se trouve à l'extérieur présente des coques extérieures visibles (16, 17) d'une partie inférieure (3) de montant A qui se raccorde au seuil (6), ainsi que d'un montant B (4) qui se raccorde au seuil (6).

4. Sous-ensemble de paroi latérale selon l'une des revendications précédentes, caractérisé en ce que le revêtement de paroi latérale (12a, 12b) couvre les segments restants de la peau extérieure du sous-ensemble de paroi latérale (2).

5. Sous-ensemble de paroi latérale selon la revendication 4, caractérisé en ce que le revêtement de paroi latérale (12a) recouvre les segments restants de la peau extérieure du sous-ensemble de paroi latérale (2) sous la forme d'un élément d'une seule pièce, fermé.
